# EUROPEAN PATENT APPLICATION

(11) **EP 2 026 392 A1**
(43) Date of publication of application: **18.02.2009**
(21) Application number: 07114532.0
(22) Date of filing: 17.08.2007
(51) Int. Cl.: H01M 6/38, H01M 6/36, H01M 2/38, H01L 51/05

(54) **Electrochemical structure**

(71) Applicant: Acreo AB, 164 40 Kista (SE)
(72) Inventor: Remonen, Tommi, 02700 Grankulla (FI); Nilsson, David, 590 48 Vikingstad (SE); Norberg, Petronella, 582 46 Linköping (SE)
(74) Representative: Bokinge, Ole

(57) **Abstract**

An electrochemical structure (1, 1') comprises a first electrochemically active element (3, 3a, 3b), and an electrolyte (4a, 4b, 4', 4a', 4b'), arranged near or in contact with the first electrochemically active element (3, 3a, 3b). The electrolyte (4a, 4b) is deformable and/or movable between a first state, wherein the structure (1) provides a first electric characteristic, and a second state, wherein the structure (1') provides a second, different electric characteristic.

## Description

### Technical Field

The invention relates to a switch and a method for controlling a current in an electronic circuit, or for programming an electronic circuit. The invention is particularly suitable for use in so-called electrochemical (EC) electronics.

### Background

Electrochemical electronics is known from e.g. WO03/047009A1, which is referred to for a closer understanding of this technology, and the entire contents of which is hereby incorporated herein by reference.

Just like in other types of electronic devices, there is a need for controlling (i.e. starting or stopping) a current flow in a circuit.

Conventionally, the control of the currents within a circuitry of electrochemical electronics has been performed by applying and removing an electric voltage/current to the polymer based electrical component. One way of controlling the voltage/current is to apply and drain a battery, which battery is arranged such that enough voltage is applied to the electrical component for a sufficiently long time. Another way is to use a mechanical switch, such as a membrane switch, or an IC controlled switch, such as a capacitive push button.

One Example of such a mechanical switch is provided in US 5,912,759, the entire contents of which is hereby incorporated herein by reference, and which discloses a switch arm comprising a metal film, which subsequent to removal of a protective tape connects two electrodes.

A disadvantage with this switch is that it is complicated to manufacture and to operate, in particular with respect to the application and removal of the protective tape.

Yet another example of such a mechanical switch is provided in US 6,285,492 B1, which discloses a switch based on the same principles as that of US 5,912,759, and which also discloses a reversible mechanical switch, wherein one end of the switch arm is fixedly connected to a first electrode and the second end of the switch arm is fixedly connected to a resilient cover layer, but overlaps a second electrode. When the cover layer is subjected to a force, the second end of the switch arm is brought into contact with the second electrode. When the force is released, the cover layer returns to its original position, breaking the connection between the second end of the switch arm and the second electrode.

The first type of switch disclosed in US 6,285,492 B1 suffers from the same advantages as those switches disclosed in US 5,912,759. A disadvantage of the second type of switch disclosed in US 6,285,492 B1 is that it is complicated to manufacture.

US 5,763,058 discloses another type of switch, wherein the electrodes are placed on top of each other, separated by a fragile or resilient insulating layer having a plurality of holes or voids therein. When a force is applied to the electrodes, the insulating layer is broken or deformed, so as to allow contact between the electrodes.

The switch disclosed in US 5,763,058 requires two layers of conducting material and one layer of insulating material to be deposited onto the substrate. Hence, it requires at least three production steps.

US 6,136,468 discloses a switch for use in an electrochemical cell, in which switch the electrodes are placed on top of each other and are separated by a separator. In a space between the electrodes, there is an electrolyte having adhesive properties. In the open state, the electrolyte is in contact with one of the electrodes, whereas the separator forms a space between the electrolyte and the second electrode. By applying a force on the second electrode, it is brought into contact with the electrolyte, and adhered to the electrolyte, whereby the circuit is activated.

The switch disclosed in US 6,136,468 is also rather complicated to manufacture, since it comprises a multi-layer structure.

Other types of known switches comprise membrane switches or switches controlled by integrated circuits, such as capacitive push buttons etc. Stopping currents has been achieved by draining batteries, e.g. using mechanical switches coupled to many small batteries in parallel.

One known electrolytic switch is disclosed in US 4,084,511, which describes an electrolytic timing element, wherein the degrading oxidation of the anode in an electrolytic liquid releases a spring, which activates the switch to arm a mine.

However, all of these solutions require more or less complicated structures, which are not easy to realize in a printing process or in a reel-to-reel process.

### Summary of the Invention

It is an object to provide an electrochemical switch, which can be produced in a cost-effective manner by a printing technique or by a reel-to-reel technique.

The object is wholly or partially achieved by an electrochemical switch according to the appended independent claim. Embodiments are set forth in the appended dependent claims an in the following description and drawings.

According to a first aspect, there is provided an electrochemical structure comprising a first electrochemically active element, and an electrolyte, arranged near or in contact with the first electrochemically active element. The electrolyte is deformable and/or movable between a first state, wherein the structure provides a first electric characteristic, and a second state, wherein the structure provides a second, different electric characteristic.

A deformation may include a permanent or temporary change in geometric shape of the electrolyte.

A movement may include that the electrolyte to be moved into, or away from, contact with one or more electrochemically active elements. Such a structure can be produced as a thin-layer structure by means of prior art printing methods. The difference in electric characteristic may be conducting and non-conducting, but it may also involve a difference in frequency response or a response to an electrical signal applied to the structure.

Such a structure may be used to provide a switch for controlling, i.e. e.g. starting and/or stopping an ionic current in a circuit containing an electrochemical device. Controllable currents include power currents or signal currents. The switch may also be used for controlling the amount of charge transferred in the circuit.

The structure is easy and cost-effective to manufacture, since it may be produced using known printing techniques. The switch may be used as a main switch for a battery, a fuel cell, a display, a transistor, a sensor or any other electrochemical device.

A prerequisite for a redox reaction of the first electrochemically active element may differ between said first and second states.

For the purposes of the present document, the term "redox reaction" is understood to include any reaction constituting a reduction reaction and/or an oxidation reaction.

Alternatively, or as a complement, the electric characteristic of the first and second states may differ due to a redox reaction of the first electrochemically active element.

The redox reaction may be a reaction between the first electrochemically active element and the electrolyte.

Yet alternatively, or as a complement, the first and second states may differ with respect to a condition for a faradic reaction of the electrochemically active element.

In one embodiment, the first electrochemically active element may be formed as a first material layer supported directly or indirectly by a substrate, and the electrolyte may be formed as a second material layer, supported directly or indirectly by the substrate. The substrate may be a flexible sheet.

The electrolyte may be deformable in response to a force or a pressure being applied to it. Thus, a pushable switch may be provided.

The electrolyte may be deformable in response to at least one of a change in temperature, a change in pressure, a chemical reaction, and adsorption or absorption of a compound.

For example, a change in temperature may incur a melting or solidification, or it may incur a thermal expansion or contraction.Thus, a temperature, pressure, or chemically sensitive switch may be provided.

The electrolyte may be a gel.

Furthermore, the said electrolyte may have adhesive properties, providing a substantially irreversible operation of the structure.

As another example, a first electrolyte portion may be hydrophilic, and a second electrolyte portion may be hydrophobic, providing a substantially reversible operation of the structure.

As yet another example, the electrolyte may be resilient.

The electrochemically active element may be selected from a group consisting of a metal, an electrochemically active polymer material and an electrochemically active ceramic material.

In the first state, the electrolyte may be spaced from the electrochemically active material, and, in the second state, the electrolyte may be in contact with the electrochemically active material.

In one embodiment, in the first state, the electrolyte comprises at least two separate electrolyte portions, which are ionically insulated from each other and from the first electrochemically active element, and wherein, in the second state, at least one of the electrolyte portions is in contact with the first electrochemically active element. For example, the electrolyte may be transferable onto the electrochemically active element, or it may at least partially stick to the electrochemically active element.

For example, the electrochemically active element may present at least two spaced apart electrolyte contact portions, aligned with a respective one of said at least two separate electrolyte portions, and wherein a detection point is provided in or on the electrochemically active element, between said electrolyte contact portions, such that a potential is detectable at said detection point. By detecting a voltage at the detection point, it is possible to determine e.g. which part of an area has been subjected to a pressure.

In another embodiment, a second electrochemically active element is spaced from the first electrochemically active element, and the electrolyte, in the first state, is spaced from at least one of the first and second electrochemically active elements, and in the second state, contacts both electrochemically active elements.

A first electrolyte portion may be arranged on the first electrochemically active element and a second electrolyte portion may be arranged on the second electrochemically active element, whereby at least one of the electrolyte portions is deformable to provide said ionic contact with the other electrolyte portion and/or with the other electrochemically active element.

In the alternative, both electrolyte portions may be deformable.

The electrolyte portion may be arranged on only on one of the electrochemically active elements, and the electrolyte portion may be deformable to contact both electrochemically active elements.

In another embodiment, the first electrolyte portion, in the first state, is spaced from both electrochemically active elements.

In the first state, a separator may be provided to prevent said electrolyte portion from contacting both electrochemically active elements, and the second state may be achievable only subsequent to removal or modification of the separator.

The separator may be degradable by influence of at least one of a chemical substance, an enzyme, temperature and radiation.

The electrolyte portions may be deformable in response to the separator being removed to provide said ionic contact with the other electrolyte or with the other electrochemically active element.

The structure may, further comprise an intermediate electrochemically active element arranged between and spaced from the first and second electrochemically active elements, whereby the first electrolyte portion, in the first state contacts said first electrochemically active element and said intermediate electrochemically active element and is insulated from the second electrochemically active element, and wherein the first electrolyte portion, in the second state, provides ionic contact between the first, second and third electrochemically active elements.

In yet another embodiment, a second electrochemically active element is spaced from the first electrochemically active element, and an intermediate electrochemically active element is arranged between and spaced from the first and second electrochemically active elements. In the first state, the intermediate electrochemically active element may be ionically and electrically insulated from said first and second electrochemically active elements, and in the second state, the intermediate electrochemically active element may be in ionic contact with the first and second electrochemically active elements, and in the second state, the first and second electrochemically active elements may be ionically insulated from each other.

Generally, the first and second electrochemically active elements may be arranged in a common plane, and the electrolyte portion, in the first state, may be arranged in a plane substantially parallel with and spaced from the common plane.

Alternatively, the first and second electrochemically active elements may be arranged in first and second separate, substantially parallel planes and the electrolyte portion may be arranged in a third plane between said first and second planes.

According to a second aspect, there is provided a switch for controlling an electrical circuit, comprising a structure as described above.

According to a third aspect, there is provided a transistor element, comprising a structure described above.

In the transistor element, the first electrochemically active element may form part of a connection between a source and a drain of the transistor.

According to a fourth aspect, there is provided a switch comprising the structure as described above, wherein the electrolyte comprises first and second electrolyte components, which in the first state are separated from each other, thereby rendering the electrolyte (4a, 4b) substantially non-ionically conducting, and wherein the electrolyte components (4aa, 4bb) are mixable upon said deformation, thereby rendering the electrolyte (4a, 4b) ionically conducting in the second state.

In the above-mentioned switch, the electrolyte components may, in the first state, be arranged on opposite sides of the first electrochemically active element, and the first electrochemically active element may be permeable to at least one of said electrolyte components.

At least one of the components may, in the first state, be encapsulated.

According to a fifth aspect, there is provided an electrochemical switch for controlling a current flow in an electrical circuit. The switch comprises a first electrochemically active element, and a second electrochemically active element, an electrolyte, arranged in contact with the first and second electrochemically active elements. The electrolyte is deformable between: a first state, wherein the switch, through a redox reaction between the at least one of the electrochemically active elements and the electrolyte, provides a first electric characteristic, and a second state, wherein the switch through electrical contact between the first and second electrochemically active elements, provides a second, different electric characteristic.

According to a sixth aspect, there is provided a switch for controlling a current flow in an electrical circuit. The switch comprises a first electrode, a second electrode, and a dielectricum, arranged in contact with the first and second electrodes. The dielectricum is deformable between a first state, wherein the switch is open, and a second state, wherein the first and second electrodes contact each other, such that such that the switch is closed.

The invention will now be described in more detail with reference to the appended drawings.

### Brief Description of the Drawings

Figs 1a-1c are schematic sectional views of a switch according to a first embodiment.
Figs 2a-2b are schematic sectional views of a switch according to a second embodiment.
Figs 3a-3b are schematic sectional views of a switch according to a third embodiment.
Figs 4a-4b are schematic sectional views of a switch according to a fourth embodiment.
Figs 5a-5b are schematic sectional views of a switch according to a fifth embodiment.
Fig. 6 is a schematic sectional view of a switch according to an alternative version of the second embodiment.
Fig. 7 is a schematic sectional view of a switch according to an another alternative version of the second embodiment.
Figs 8a-8b are schematic sectional views of a switch according to a sixth embodiment.
Fig. 9 is a schematic sectional view of a switch according to an alternative version of the sixth embodiment.
Figs 10a-10b are schematic sectional views of a switch according to a seventh embodiment.
Fig. 11 is a schematic sectional view of a switch according to an alternative version of the seventh embodiment.
Fig. 12 is a schematic planar view of a mechanically switchable bi-stable transistor.
Fig. 13 is a schematic planar view of a mechanically switchable dynamic transistor.
Figs 14a-14b are schematic sectional views of a switch according to an eighth embodiment.
Figs 15a-15b are schematic sectional views of a switch according to a ninth embodiment.

### Description of Embodiments

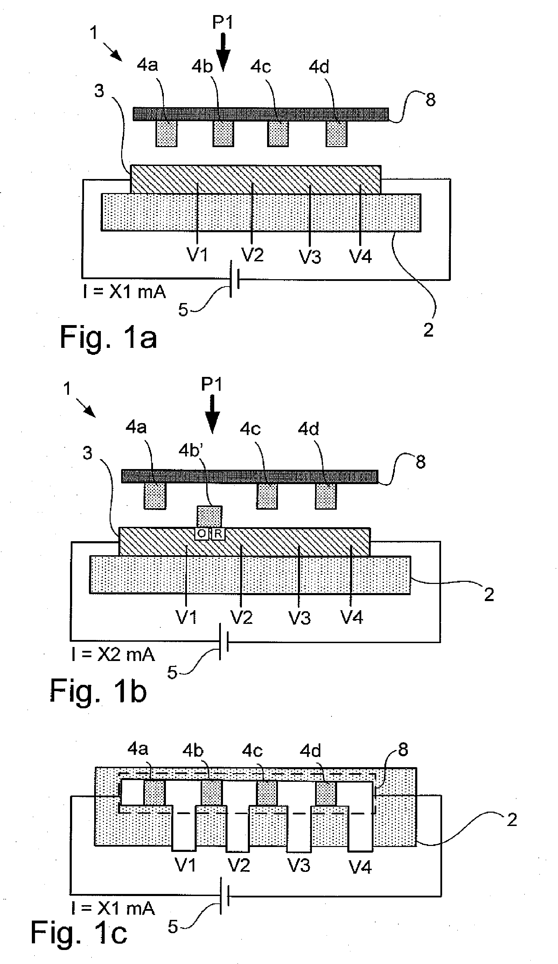

Figs 1 a-1 c illustrate a first embodiment of an electrochemical switch, wherein the switch 1, in the initial state (Fig. 1a), comprises a plurality of discrete, mutually spaced apart electrolyte portions 4a, 4b, 4c, 4d, all of which are arranged on a protective layer 8, which may be flexible and resilient, above a single conducting polymer electrode 3. When pressed at a predetermined position, P1, some of the electrolyte portions 4a, 4b; 4c, 4d will contact the polymer electrode 3 and provide a local redox reaction, which will alter a detectable voltage characteristic V1, V2, V3, V4.

Fig. 1 c illustrates the structure of Figs 1 a-1 b in a plane view from above. As can be seen, between each pair of electrolyte contact portions, there is a branch, at which a voltage may be detected.

Referring to Figs 1 a-1 c, there is illustrated, in cross section, the effect of a local pressure P1 applied to the area of electrolyte portion 4b. When this electrolyte portion 4b' (Fig. 1 b) contacts the electrode 3, it will provide an electrochemical reaction, as indicated by O and R, which will provide different voltage characteristic. In particular, since there is a reduction taking place between the detection portions for V1 and V2, the potential at V1 will be high and the potentials at V2-V4 will be low.

Prior to the pressure P1 being applied, the potential over V1-V4 will drop approximately linearly from left to right in the figure, due to the impedance of the electrode material.

Subsequent to the pressure P1 having been applied, V1 will present approximately the same potential as before, whereas V2-V4 will present a considerably lower potential, due to the redox reaction taking place in the electrode material, where it is in contact with the electrolyte. Hence, a voltage drop will occur over the area where the electrolyte contacts the electrode material, resulting in different potentials being detectable. Also, an approximately linear voltage drop will occur from left to right in the figure, over V2-V4, due to the impedance of the electrode material. This voltage drop will be smaller than prior to the pressure P1 having been applied.

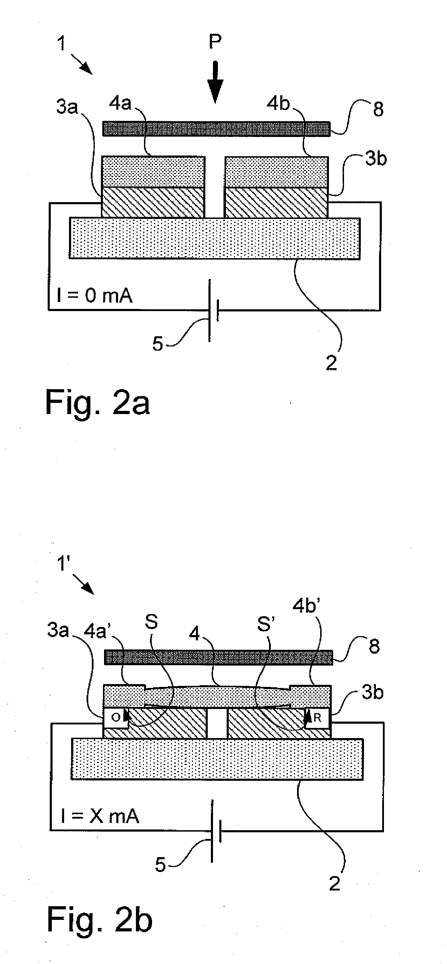

Figs 2a-2b illustrate a second embodiment of a switch 1 in a first, non-conducting, state. Electrodes 3a, 3b are arranged as a patterned layer on a substrate 2. The substrate may be flexible, e.g. a paper, polymer film etc. A current source 5 is schematically connected to the electrodes 3a, 3b. As indicated, the current I in the circuit is 0, since there is no contact between the electrodes 3a, 3b. Electrolyte portions 4a, 4b is arranged as a patterned layer on the electrodes 3a, 3b. The electrolyte portions 4a, 4b may have the same extension as the electrode, i.e. cover the entire electrode, or have a greater or smaller extension.

In the embodiment shown in Fig. 2a, the electrolyte portions 4a, 4b has approximately the same extension as the electrodes 3a, 3b. The electrolyte portions 4a, 4b may be a gel type electrolyte, which after having been deposited on the electrodes, substantially maintains its shape, but which is deformable, e.g. in response to a force or pressure being applied as indicated by the arrow P in Fig. 2a. The force or pressure may be applied by a user's fingertip or by an external mechanical device (not shown), such as a lever, a pin etc. By arranging the switch in an enclosure a boundary of which is provided by the flexible support layer 8, the activation force or pressure may be provided in the form of a pressure change in the space outside the enclosure, forcing the enclosure to yield and provide the force or pressure activating the switch.

The force or pressure indicated by arrow P in Fig. 1 deforms both electrolyte portions 4a, 4b so that they bridge the gap between the electrodes 3a, 3b and contact each other.

Furthermore, it is possible to provide a flexible protective layer 8 over the electrolyte, so as to prevent contamination of the electrolyte and to prevent the electrolyte from contacting e.g. a user's finger etc. Such protective layers 8 may be provided with suitable graphics, e.g. indicating the existence of the switch. Such protective layers 8 may be provided in any of the herein illustrated embodiments, but is optional.

Fig. 2b illustrates the switch 1' in its conducting state, wherein respective portions of the electrolyte portions 4a, 4b together form a deformed electrolyte portion 4, providing an ionical contact between the first and second electrolyte portions 4a, 4b, which in turn are in contact with the respective electrodes 3a, 3b, thereby providing an ionical contact between the electrodes 3a, 3b and thus closing the circuit, as is indicated by the current I of the circuit being X mA.

In the contact surfaces S, S' between the respective electrolyte portion 4a, 4b and the respective electrode 3a, 3b, redox reactions occur. More particularly, an oxidation reaction (indicated by 'O') occurs at a first contact surface S between the first electrode 3a and the first electrolyte portion 4a; and a reduction reaction (indicated by 'R') occurs at a second contact surface S' between the second electrode 3b and the second electrolyte portion 4b.

It is the amount of active electrode material at the smallest one of the contact surfaces S, S' that determines the capacity of the switch. When all active electrode material at the smallest one of the contact surfaces S, S' has been consumed, the switch 1, 1' will cease to conduct. Hence, by determining the extent of the electrodes and/or the electrolyte, i.e. the size of the contact surfaces S, S', it is possible to design the switch to allow a certain amount of charge to pass, before the switch ceases to conduct.

When providing a switch having a very thin layer electrodes 3a, 3b, substantially all of the electrode thickness will be active in the redox reactions, and so, in practice, it will be the size of the contact surface that determines the charge conducting capacity of the switch.

Whereas the switch as described above will have a limited DC capacity, it will still allow an AC to pass. The switch 1, 1' as described above can be designed, when in its conducting state, to allow AC in the Hz-MHz range to pass, while only allowing DC until the thus predetermined charge conducting capacity has been reached.

Once the limit of the charge conducting capacity has been reached, the switch may act as a battery, providing a current in the circuit, possibly in subsequent to disconnection of the current source 5.

The electrolyte may be semi-solid or solid and meltable.

A semi-solid electrolyte may be e.g. gel-like, i.e. it may have a viscosity that is high enough for the electrolyte to remain at its deposited position in the non-conducting state, and low enough for the electrolyte to be deformable so as to provide contact between the electrodes.

The electrolyte may thus be a gel, i.e. a semisolid system consisting of a network of solid aggregates in which liquid is held.

As another alternative, the electrolyte may be a soft, flexible solid substance.

As yet another alternative, the electrolyte may be solid and meltable so as to provide contact between the electrodes, e.g. to be deformable in response to a change in temperature. Non-limiting examples of electrolytes are polyethyleneoxide and polyethylene glycol. Thus, the switch may be used as a temperature sensor.

Whereas the embodiments set forth above may generally be expected to be non-reversible, i.e. after switching, the electrolyte does not return to its original state, it is also possible to provide a strictly non-reversible switch, e.g. by using an electrolyte having adhesive properties, such as a glue. Thus, a switch providing a secure connection may be provided.

Another example of such an electrolyte that may be suitable in some applications is a mixture, which, as a non-limiting example, prior to processing, such as drying, may be formed of about 7 % Hydroxyethylcellulose, about 21 % Glycerol, about 7% Sodium citrate and about 65% H2O.

In one embodiment, a two-component glue may be used, whereby each electrolyte portion 4a, 4b (Fig. 2a and 2b) comprises a respective glue component, such as a glue base and a hardener. Such embodiments may be dependent on proper mixing of hardener and glue base. Thus, a first electrolyte portion 4a comprises a glue base, and a second electrolyte 4b comprises a hardener or a catalyst, whereby said adhesive electrolyte is provided by said first and second electrolytes 4a, 4b being joined during said deformation.

It is also possible to provide a reversible switch. According to one embodiment, a reversible switch may be provided by using a hydrophobic electrolyte portion together with a hydrophilic electrolyte portion (Fig. 2a and 2b), e.g. a water based electrolyte and an oil based electrolyte, respectively. When the switch is activated by a force or pressure P, the two electrolytes are forced together, thereby forming an ionic contact between the electrodes. When the force or pressure P is released, the electrolytes separate and the ionic contact ceases.

According to a second embodiment, a reversible switch may be provided by using a resilient electrolyte, e.g. an electrolyte which is curable (e.g. by UV radiation) into a resilient structure that deforms when being subjected to the force or pressure P, in order to return to spring back to its original position once the force or pressure P is released.

In yet another embodiment, it is possible to select an electrolyte whose properties are highly dependent on temperature, i.e. has a high thermal expansion coefficient, whereby the electrolyte portions 4a, 4b is deformable by thermal contraction and/or expansion.

In yet another embodiment, the electrolyte portions 4a, 4b is deformable in response to a chemical reaction. For example, the electrolyte portions 4a, 4b may be deformable in response to adsorption or absorption of a compound. Thus, the electrolyte portions 4a, 4b may be arranged to swell when subjected to a predetermined compound, for example water to provide a humidity sensor.

In the first state of the switch 1 (Fig. 2a), it is completely non-conducting, i.e. it conducts neither ionically nor electrically. When switched to the second state of the switch 1' (Fig. 2b), it is initially ionically conducting between the electrodes 3a, 3b, whereby oxidation and reduction occurs on the respective electrodes 3a, 3b. As the redox reaction continues, the electrodes 3a, 3b will gradually be consumed, leading to a decrease in the ionic current, and ultimately leading to the switch 1' ceasing to conduct, apart from background current (nA). When the voltage 5 is removed, the electrodes 3a, 3b will maintain their oxidized and reduced states, respectively, unless an electrical contact (not shown) is provided between the electrodes 3a, 3b. Hence, the switch 1' will maintain its redox state until a reverse voltage is applied to it, or until short-circuited. Hence, the switch 1, 1' can be said to be bi-stable when the voltage is removed, or to form a charged battery.

Such a switch 1, 1' may be used to block a direct current while allowing an alternating current to pass. It may also be used to provide a bandpass filter, allowing low frequencies to pass while blocking high frequencies.

If the electrodes 3a, 3b are made of electrochromic polymers, they change their visible color upon reduction or oxidation, this effect can be used e.g. to present information.

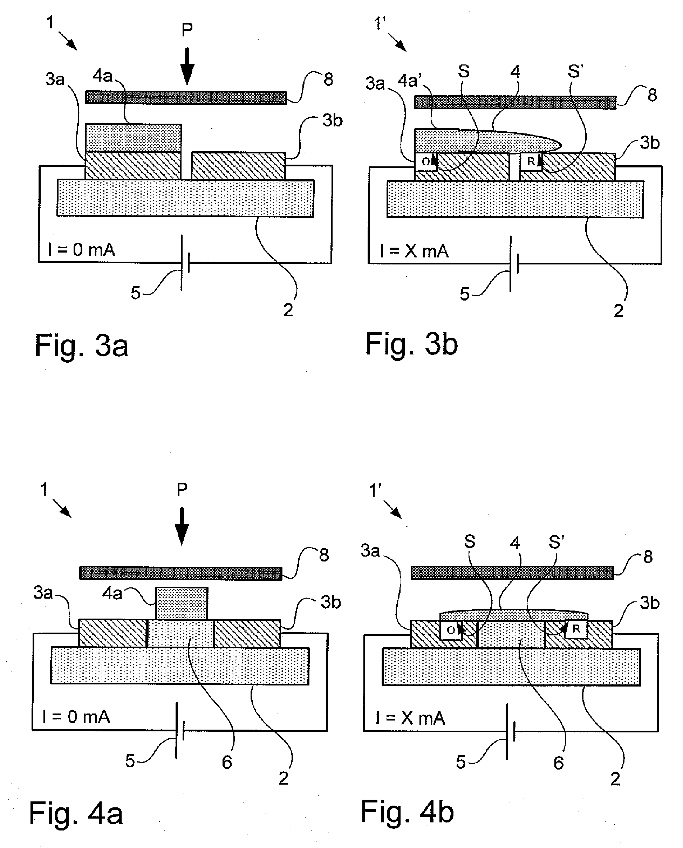

Figs 3a and 3b illustrate a third embodiment, wherein the first electrolyte 4a is arranged on one electrode only, and wherein substantially no electrolyte is present on the second electrode in the non-conducting state of the switch 1. When the force or pressure P is applied, the electrolyte deforms and flows so as to cover also the second electrode 3b, thereby providing a first contact surface S with the first electrode 3a and a second contact surface S' (Fig. 3b) with the second electrode 3b, whereby the switch 1' assumes its conducting state.

The switch according to the third embodiment may be made non-reversible by using a glue type electrolyte or reversible by using a curable electrolyte, as described above with reference to Figs 3a and 3b. Also, the electrolyte may be solid or semi-solid.

By controlling the amount of electrolyte 3a and its direction of float upon deformation, it is possible to measure the force or pressure by determining the amount of charge that is transferred, which is proportional to the extension of the second contact surface S'.

Figs 4a and 4b illustrate a fourth embodiment of the switch 1, 1', wherein the electrolyte 4a, in the non-conducting state as illustrated by Fig. 4a is substantially entirely laterally spaced from the electrodes 3a, 3b, thus providing substantially no contact surface at all between the electrodes 3a, 3b and the electrolyte 4a.

Upon application of the force or pressure P, as illustrated in Fig. 4a, the electrolyte 4a is deformed, thereby flowing so as to provide contact between the electrodes 3a, 3b, forming first and second contact surfaces S, S', analogously with what was described with respect to Figs. 2a, 2b, 3a and 3b.

The switch according to the fourth embodiment may be made non-reversible by using a glue type electrolyte or reversible by using a curable electrolyte, as described above with reference to Figs 3a and 3b. Also, the electrolyte may be solid or semi-solid.

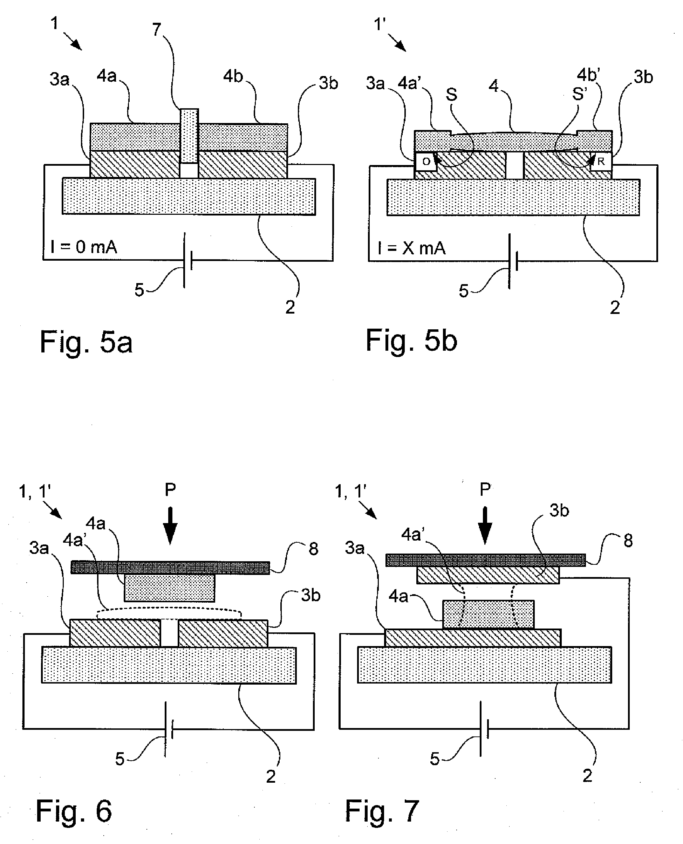

Figs 5a and 5b illustrate a fifth embodiment of the switch 1, 1', wherein a separator 7 may be arranged between the electrolyte portions 4a, 4b. The separator 7 may be provided with a view to ascertaining that the switch is not unintentionally activated, and may thereby be removed manually when the switch is to be used. The embodiment of Figs 5a and 5b may also be used without the separator 7.

Alternatively, the removal of the separator 7 may allow the electrolyte portions 4a, 4b to deform and thereby activate the switch 1, 1'.

The separator 7 may be removable in response to a change in temperature, e.g. by melting. Alternatively, it may be degradable by influence of radiation, such as light or other types of electromagnetic radiation. Alternatively, the separator 7 may be chemically or biologically degradable, i.e. degradable by interaction with one or more chemical substances, enzymes or the like. As an alternative, instead of being degradable, the separator 7 may be rendered permeable to the electrolyte by such influence or interaction. As yet another option, the separator 7 may become ionically conductive because of such degradation.

Instead of a pressure or force P as referred to in the different embodiments above, the electrolyte portions 4a, 4b may be deformable through e.g. melting, chemical interaction with other substances, e.g. dissolving or softening an initially solid or semi-solid electrolyte. It is also possible to use lower viscosity electrolyte portions, which spontaneously floats together.

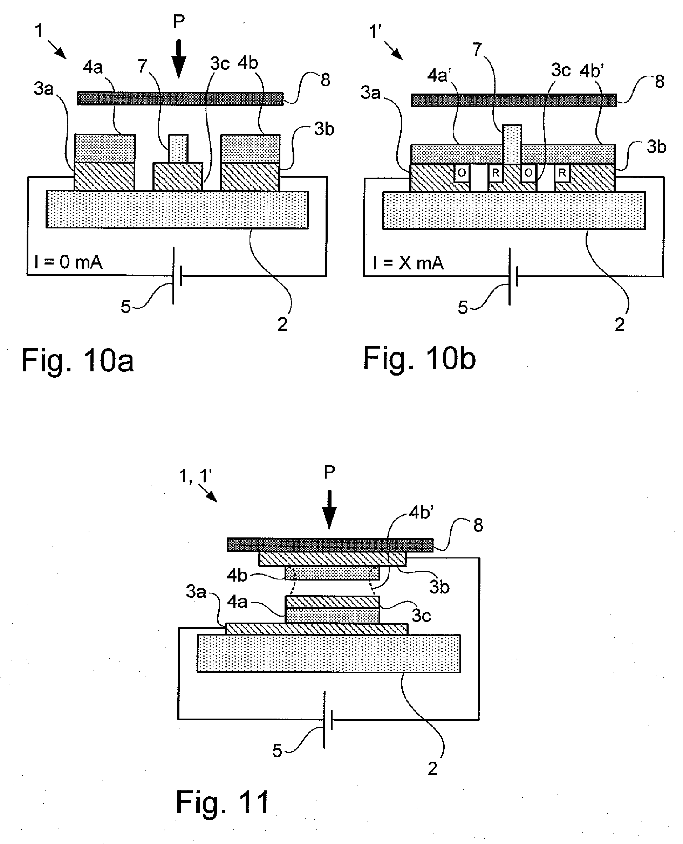

Fig. 6 illustrates an alternative embodiment, similar to, and having the same electrical characteristics as, that of Figs 2a-2b, 3a-3b, 4a-4b and 5a-5b, wherein the electrolyte 4a, in the first state of the switch, is arranged on the flexible protective layer 8, spaced from one or both electrodes 3a, 3b. The electrolyte 4a may be arranged only above one of the electrodes 3a, 3b above both, or in a position wherein it is laterally spaced from both electrodes, similar to Fig. 4a. In the second state, as is indicated by the dashed line in Fig. 11, the electrolyte 4a' contacts both electrodes 3a, 3b. In one embodiment, the electrolyte 4a' is separated from the flexible protective layer 8, and thus "transferred" to the electrodes. In another embodiment, the electrolyte 4a', in the second state of the switch 1', contacts both the electrodes 3a, 3b and the flexible protective layer 8.

Fig. 7 illustrates another alternative embodiment, having the same electrical characteristics as that of Figs 2a-2b, 3a-3b, 4a-4b and 5a-5b, but wherein the electrodes are arranged in an overlapping manner. For example, one electrode may be supported on the substrate 2 and another electrode may be supported on the flexible protective layer 8. The electrolyte 4a may, in the first state of the switch 1, be arranged on the upper or on the lower electrode. When the force or pressure P is applied, the electrolyte 4a will contact both electrodes, whereby the ionic contact between the electrodes is provided.

The electrolyte 4a may be selected such that if the flexible protective layer 8 returns to its initial position subsequent to the force or pressure P having been applied, it adheres to both electrodes, thereby deforming and maintaining contact with both electrodes 3a, 3b, as is illustrated by the dashed lines in Fig. 7. The switch 1, 1' will thereby present the same electrical characteristics as that of Figs 2a-2b, 3a-3b, 3a-4b and 5a-5b.

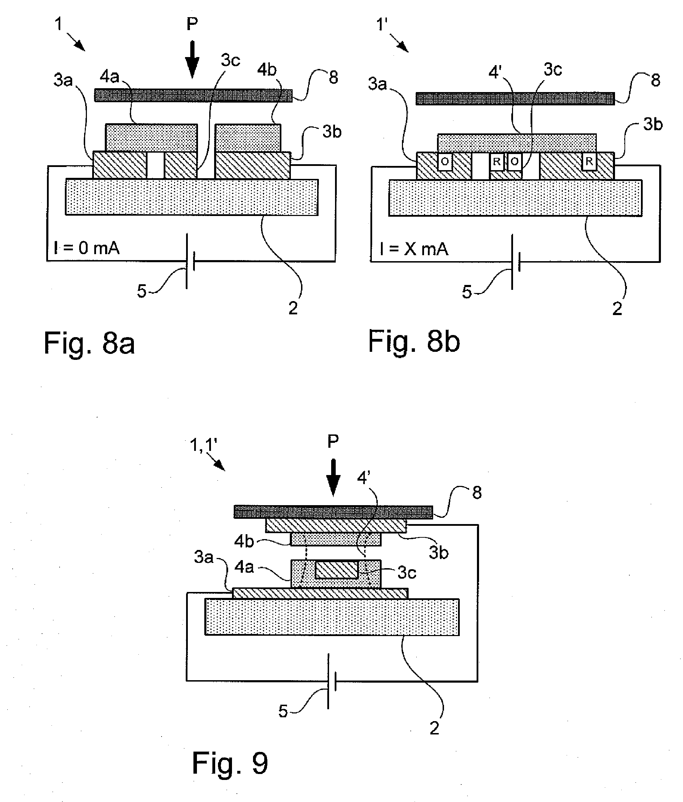

Figs 8a and 8b illustrates a sixth embodiment of an electrochemical switch 1, wherein the switch 1, in the initial state (Fig. 8a), comprises a first electrolyte portion 4a extending over a first electrode 3a and an intermediate electrode 3c. A second electrolyte portion 4b is provided on a second electrode 3b. The second electrode 3b and second electrolyte 4b are electrically and ionically insulated from the first electrode 3a, the intermediate electrode 3c and the first electrolyte portion 4a. In this state, the switch 1 is non-conducting.

When subjected to a force or pressure P the first and second electrolyte portions 4a, 4b are deformed to form a single electrolyte 4' connecting all three electrodes 3a, 3b, 3c, thereby rendering the switch 1' ionically conductive. At the intermediate electrode 3c, redox reactions occur, just like at the respective first and second electrodes 3a, 3b. Thus, a current is induced in the intermediate electrode 3c, i.e. some of the current between the first and second electrodes will be ionically conducted through the electrolyte 4' and some will be conducted through the intermediate electrode 3c.

In the initial state (Fig. 8a), the switch 1 will be non conducting, both ionically and electrically, just like the switch of Fig. 2a.

In the second state (Fig. 8b), the switch will have the same characteristics as that of Fig. 2b with respect to the first and second electrodes 3a, 3b, i.e. it will be bi-stable. However, with regard to the intermediate electrode, the characteristics will be different: when the voltage 5 is applied between the first and second electrodes 3a, 3b, an ion current will flow through the electrolyte 4'. This ion current will induce a redox reaction in the intermediate electrode 3c, since some of the current will flow through the intermediate electrode 3c instead of through the electrolyte 4'. Portions (marked 'R') of the intermediated electrode 3c will therefore become reduced and other portions (marked 'O') will become oxidated. Hence, the intermediate electrode may, e.g. change color due to the redox reaction. When the voltage 5 is removed, the intermediate electrode will still have both electrical and ionic contact between its reduced and oxidated portions, and hence the reaction will automatically reverse, whereby, in the example given, the color change is reversed. The switch of Figs 6a-6b can therefore be said to be unstable, since it does not maintain its redox state when the voltage is removed.

A switch of this type may be used to present information that is to be visible during a predetermined time period, and thereafter vanish.

Fig. 9 illustrates an alternative embodiment of the switch described with respect to Figs 8a-8b, and having the same electrical characteristics as the embodiment described with respect to Figs 8a-8b, and wherein the first and second electrodes 3a, 3b are arranged in an overlapping manner.

In the embodiment of Fig. 9, the first electrode 3a is arranged on the substrate 2 and the second electrode 3a is arranged on the flexible protective layer 8. A first electrolyte portion 4a is arranged on the first electrode 3a and an intermediate electrode 3c is arranged in or on the first electrolyte portion 4a, such that it is electrically insulated from the first electrode by the first electrolyte portion 4a, and such that it is ionically connectable to the first electrode 3a through the first electrolyte portion 4a.

A second electrolyte portion may be arranged on the second electrode 3b, such that, when the switch 1, 1' is subjected to the force or pressure P, the first electrolyte portion and/or the second electrolyte portion contact each other, and is deformed as illustrated by the dashed lines in Fig. 9, thereby providing ionical contact between the first and second electrodes 3a, 3b, and between the intermediate electrode 3c and the first and second electrodes 3a, 3b.

Alternatively, the second electrolyte portion may be integrated with the first electrolyte portion, such that the third electrode 3c is embedded within the electrolyte portions 4a, 4b. In this embodiment, there need not be any electrolyte at all on the second electrode 3b in the first state of the switch 1, 1'.

Figs 10a and 10b illustrates a seventh embodiment of an electrochemical switch, wherein the switch 1, in the initial state (Fig. 10a), comprises first and second spaced apart electrodes 3a, 3b and an intermediate electrode 3c arranged therebetween. First and second electrolyte portions 4a, 4b are arranged on or near the respective first and second electrodes 3a ,3b, respectively, and in this initial state, the intermediate electrode 3c is ionically and electrically insulated from both the first and the second electrodes 3a, 3b.

When subjected to a force or pressure P, the first and second electrolyte portions 4a, 4b are deformed to form a single electrolyte 4' connecting all three electrodes 3a, 3b, 3c, thereby rendering the switch 1' ionically conductive in the first and second deformed electrolyte portions 4a, 4b, and electrically conductive in the intermediate electrode 3c. A separator 7, may be arranged e.g. on the intermediate electrode 3c, to ascertain that there is no ionical contact between the first and second electrode portions 4a, 4b.

As opposed to the switch described with reference to Figs 8a-8b, this switch will be bi-stable, also with respect to the intermediate electrode 3c, and may thus work as a re-chargeable battery.

In the first state (Fig. 10a), the switch 1 will be ionically and electrically non-conducting.

In the second state (Fig. 10b), the switch 1' will be ionically conducting between the first electrode 3a and a first portion (marked 'R') of the intermediate electrode 3c. The switch 1' will also be ionically conducting between the second electrode 3b and a second portion (marked 'O') of the intermediate electrode 3c. However, the switch 1' will not be ionically conducting between the first and second electrodes 3a, 3b. Instead, the intermediate electrode 3c will provide an electrically conducting bridge between the deformed electrolyte portions 4a', 4b'.

When the voltage 5 is removed, the intermediate electrode 3c will not become short-circuited as in Fig. 8b, because there will be no ionic contact between the first and second portions of the intermediate electrode 3c. However, some materials, such as PEDOT:PSS are both ionically and electrically conducting, and may thus provide a short circuit, since they conduct both ions and electrons.

Hence, the switch 1, 1' illustrated in Figs. 10a-10b will be bi-stable, with respect to all electrodes 3a, 3b, 3c.

Fig. 11 illustrates an alternative embodiment of the switch described with respect to Figs 10a-10b, having similar electrical characteristics as the embodiment described with respect to Figs 10a-10b, and wherein the first and second electrodes 3a, 3b are arranged in an overlapping manner.

In the embodiment of Fig. 11, the first electrode 3a is arranged on the substrate 2 and the second electrode 4b is arranged on the flexible protective layer 8. A first electrolyte portion 4a is arranged on the first electrode 3a and an intermediate electrode 3c is arranged on the first electrolyte portion 4a, such that it is electrically insulated from the first electrode by the first electrolyte portion 4a, and such that it is ionically connectable to the first electrode 3a through the first electrolyte portion 4a.

Analogously to the embodiment of Fig. 9, a second electrolyte portion 4b may be arranged on the second electrode 4b or on the intermediate electrode 3c, provided that the first and second electrolyte portions 4a, 4b are separated from each other in all states of the switch 1, 1', thus preventing ionic contact between the first and second electrodes 3a, 3b.

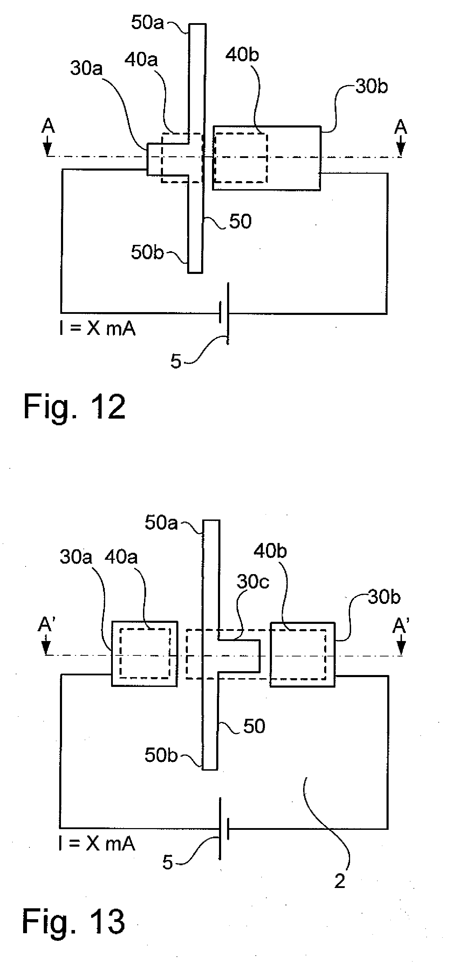

Referring to Figs 12 and 13, embodiments of transistors based on the structures disclosed in Figs 2a-2b and 8a-8b, respectively will now be described.

The transistors comprise first and second control electrodes 30a, 30b, and a controllable lead 50, extending between a source 50a and a drain 50b. Furthermore, the transistor comprises first and second deformable electrode portions 40a, 40b. The lead comprises an electrochemically active element.

Referring to Fig. 12, a bi-stable transistor may be provided based on the switch structure illustrated in Figs 2a-2b. Figs 2a-2b may be perceived as a sectional view along the line A-A in Fig. 12.

In an initial, non-deformed state of the transistor, the lead 50 is conducting, since the circuit between control electrodes 30a, 30b is open, and there is no electrical or ionic contact between them.

A current between the source 50a and the drain 50b is controllable by means of a voltage 5 applied over the control electrodes 30a, 30b, or over the second electrode 30b (which may be seen as a gate electrode) and the source 50a or the drain 50b.

When the transistor is switched, by a pressure (see Fig, 2a) the electrolyte portions 40a, 40b are deformed and contact each other, so as to close the circuit between the control electrodes 30a, 30b. In the ensuing redox reaction, the first control electrode 30a, of which the lead 50 forms part, will be reduced, whereby its ability to function as a conductor between the source 50a and the drain 50b will be suppressed. Once the first control electrode 30a has been completely reduced, the lead will cease functioning as a conductor. At this point, the current I in the circuit between the control electrodes 30a, 30b will cease. As there will be no, or very little, effective oxidized portion left of the first control electrode 30a, disconnecting the voltage 5 will render the transistor stable in its non-conducting state. Switching the polarity of the voltage may reverse the reaction, thus rendering the lead 50 conducting.

Referring to Fig. 13, a dynamic transistor may be provided based on the switch structure illustrated in Figs 8a-8b. Figs 8a-8b may be perceived as a sectional view along the line A'-A' in Fig. 13. Here, the lead 50 forms part of a third electrode 30c, which when activated (pressed) will present a reduced portion closest to the first control electrode 30a and an oxidized portion closest to the second control electrode 30b. The control electrodes 30a, 30b hence form gate electrodes. Hence, when the voltage 5 is disconnected, the redox reaction of the third electrode 30c will reverse, and the lead 50 will become conducting again.

Hence, the switch may be applied to the transistor structures disclosed in WO03/047009A1, and used to activate such transistor structures.

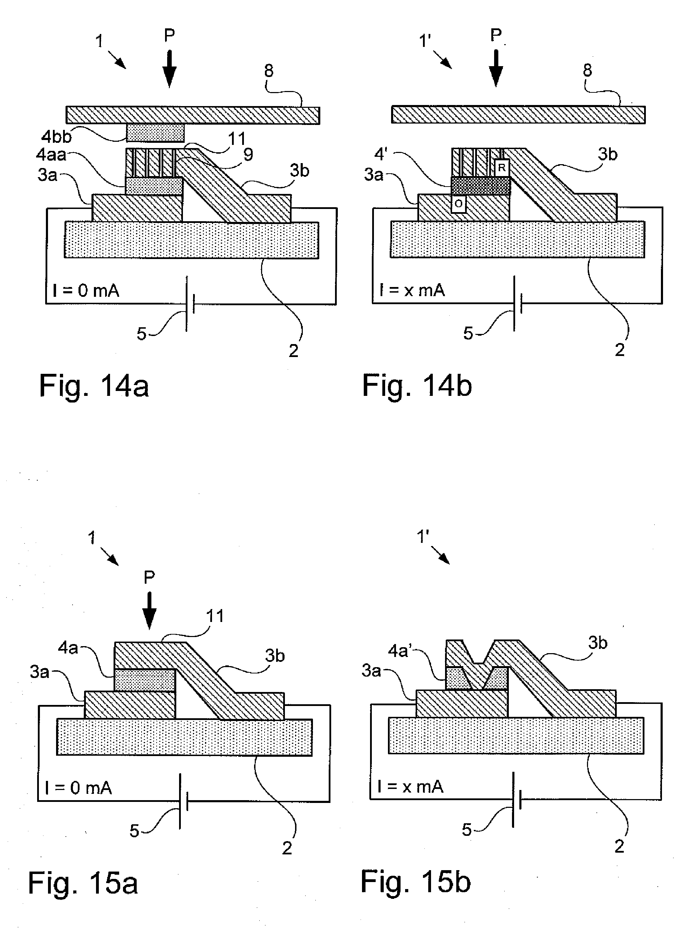

Figs 14a and 14b illustrates an eighth embodiment of an electrochemical switch, wherein the switch 1, comprises first and second electrodes 3a, 3b, whereby a portion of the electrodes overlap each other. Between the electrodes is arranged a first electrolyte component 4a, which in the first state (Fig. 14a) is ionically and electrically non-conductive, thus keeping the overlapping portions of the first and second electrodes 3a, 3b spaced apart. A portion 11 of the second electrode 3b is permeable, a property which may be provided by e.g. through-holes 9 or pores in the portion 11 of the second electrode 3b. On the other side of the second electrode 3b, a second electrolyte component 4b is provided.

When applying the force or pressure P to the switch 1', the first and second electrolyte components are forced towards each other and become mixed through the permeable electrode portion 11, thereby providing the electrolyte 4', as is illustrated in Fig. 14b. The electrolyte components 4a, 4b may be e.g. a ionically and electrically non-conducting liquid carrier and a salt, respectively, which when mixed form the ionically conducting electrolyte, whereby the switch 1' is rendered ionically conducting. The liquid component may be encapsulated, in order to prevent the switch from activating itself. The encapsulation may e.g. break when the switch is subjected to the pressure P.

The switch of Figs 14a-14b will present the same electrical characteristics as that of Figs 2a-2b, 3a-3b, 4a-4b and 5a-5b.

Figs 15a and 15b illustrates a ninth embodiment of a switch, wherein the switch 1, comprises two overlapping electrodes 3a, 3b, and whereby a flowable or moldable electrolyte or dielectricum 4a is arranged between overlapping portions of the electrodes 3a, 3b.

When subjected to a force or pressure P, the overlapping portions 8 are forced towards each other, causing the electrolyte or dielectricum 4a to become displaced and yield, whereby electrical contact between the first and second electrodes 3a, 3b is achieved.

In a first embodiment, there is an electrolyte 4a arranged between the electrodes. Hence, the switch will change from an ionically conducting state to an electrically conducting state.

In a first state (Fig. 15a) of the switch 1, the electrodes are in an ionic contact via the electrolyte 4a, and in a second state (Fig. 15b) of the switch 1', the electrodes are in electrical contact with each other.

Hence, in the first state the switch properties (electric characteristic) are similar to those of the switch (second state) shown in Fig. 2b, and thus its conductivity will depend on the amount of active material available for reduction/oxidation.In the second state, the switch will be electrically conducting, thereby short-circuiting the ionic connection, allowing the redox reaction that took place in the first state to reverse.

In a second embodiment, there is a dielectricum 4a arranged between the electrodes. Hence, the switch will be switachable between an open state and a closed state.

The switches described with respect to Figs 1 a-1 b, 2a-2b, 5a-5b, 8a-9 and 10a-11, may be made non-reversible by using a one or two-component glue type electrolyte or reversible by using a curable or hydrophilic-hydrophobic electrolyte, as described above with reference to Figs 2a and 2b. Also, the electrolyte may be solid or semi-solid. The switch as described herein may be produced through the methods described and referred to in WO03/047009A1, i.e. by patterning techniques such as screen printing, inkjet printing, flexo printing, off-set printing or even pen-printing (i.e. handwriting or by using a plotter). Thus, the electrodes and electrolyte may be applied by any one of these techniques.

Also, substrate, electrodes and electrolyte may be selected from the ones mentioned in WO03/047009A1, but other materials are not excluded. In case metallic or ceramic materials are chosen for the electrodes, these may be deposited using known methods for deposition, etching etc.

In all of the embodiments disclosed herein, as an alternative to a reduction of the electrochemically active element, an overoxidation may also be provided, which may cause the electrochemically active element to lose its conductivity. This may be useful for e.g. security reasons, where a one-time operation is desirable.

## Claims

1. An electrochemical structure (1, 1') comprising:
a first electrochemically active element (3, 3a, 3b), and
an electrolyte (4a, 4b, 4', 4a', 4b'), arranged near or in contact with the first electrochemically active element (3, 3a, 3b),
**characterized in that**
the electrolyte (4a, 4b) is deformable and/or movable between:
a first state, wherein the structure (1) provides a first electric characteristic, and
a second state, wherein the structure (1'), provides a second, different electric characteristic.

2. The structure as claimed in claim 1, wherein a prerequisite for a redox reaction of the first electrochemically active element differs between said first and second states.

3. The structure as claimed in claim 1 or 2, wherein the electric characteristic of the first and second states differ due to a redox reaction of the first electrochemically active element (3, 3a, 3b).

4. The structure as claimed in claim 2 or 3, wherein the redox reaction is a reaction between the first electrochemically active element and the electrolyte.

5. The structure as claimed in claim 1, wherein the first and second states differ with respect to a condition for a faradic reaction of the first electrochemically active element.

6. The structure as claimed in any one of the preceding claims, wherein the first electrochemically active element (3a) is formed as a first material layer supported directly or indirectly by a substrate (2), and wherein the electrolyte (4a, 4b) is formed as a second material layer, supported directly or indirectly by the substrate (2).

7. The structure as claimed in claim 6, wherein the substrate is a flexible sheet.

8. The structure as claimed in any one of the preceding claims, wherein the electrolyte (4a, 4b) is deformable in response to a force or a pressure being applied to it.

9. The structure as claimed in any one of the preceding claims, wherein the electrolyte (4a, 4b) is deformable in response to a change in an external parameter.

10. The structure as claimed in claim 9, wherein the electrolyte (4a, 4b) is deformable in response to at least one of a change in temperature, a change in pressure, a chemical reaction, and adsorption or absorption of a compound.

11. The structure as claimed in any one of the preceding claims, wherein the electrolyte is a gel.

12. The structure as claimed in any one of the preceding claims, wherein the electrolyte is adhesive, providing a structure having a substantially irreversible operation.

13. The structure as claimed in any one of claims 1-11, wherein a first electrolyte portion (4a) is hydrophilic, and a second electrolyte portion (4b) is hydrophobic, providing a structure having a substantially reversible operation.

14. The structure as claimed in any one of claims 1-11, wherein the electrolyte is resilient.

15. The structure as claimed in any one of the preceding claims, wherein the electrochemically active element (3a, 3b, 3c) is selected from a group consisting of a metal, an electrochemically active polymer material and an electrochemically active ceramic material.

16. The structure as claimed in any one of the preceding claims, wherein, in the first state, the electrolyte is spaced from the electrochemically active material, and, in the second state, the electrolyte is in contact with the electrochemically active material.

17. The structure as claimed in any one of the preceding claims, wherein, in the first state, the electrolyte comprises at least two separate electrolyte portions (4a, 4b, 4c, 4d), which are ionically insulated from each other and from the first electrochemically active element (3), and wherein, in the second state, at least one of the electrolyte portions (4a, 4b, 4c, 4d) is in contact with the first electrochemically active element (3).

18. The structure as claimed in claim 17, wherein the electrochemically active element presents at least two spaced apart electrolyte contact portions, aligned with said at least two separate electrolyte portions, respectively, and wherein a detection point is provided in or on the electrochemically active element (3), between said electrolyte contact portions, such that a potential is detectable at said detection point.

19. The structure as claimed in any one of the preceding claims, wherein a second electrochemically active element (3b) is spaced from the first electrochemically active element (3a), and wherein the electrolyte (4a, 4b, 4'), in the first state, is spaced from at least one of the first and second electrochemically active elements (3a, 3b), and in the second state, contacts both electrochemically active elements (3a, 3b).

20. The structure as claimed in claim 19, wherein a first electrolyte portion (4a) is arranged on the first electrochemically active element (3a) and a second electrolyte portion (4b) is arranged on the second electrochemically active element (3b), whereby at least one of the electrolyte portions (4a, 4b) is deformable to provide said ionic contact with the other electrolyte portion (4b, 4a) and/or with the other electrochemically active element (3b, 3a).

21. The structure as claimed in claim 20, wherein both electrolyte portions (4a, 4b) are deformable.

22. The structure as claimed in claim 20, wherein the electrolyte portion (4a) is arranged on only on one of the electrochemically active elements, and wherein the electrolyte portion (4a) is deformable to contact both electrochemically active elements (3a, 3b).

23. The structure as claimed in claim 10 wherein the first electrolyte portion (4a), in the first state, is spaced from both electrochemically active elements (3a, 3b).

24. The structure as claimed in claim 20, wherein, in the first state, a separator (7) is provided to prevent said electrolyte portion (4a, 4b) from contacting both electrochemically active elements (3a, 3b), and wherein the second state is achievable only subsequent to removal or modification of the separator (7).

25. The structure as claimed in claim 24, wherein the separator (7) is degradable by influence of at least one of a chemical substance, an enzyme, temperature and radiation.

26. The structure as claimed in claim 24 or 25, wherein the electrolyte portions (4a, 4b) are deformable in response to said separator (7) being removed to provide said ionic contact with the other electrolyte (4b, 4a) or with the other electrochemically active element (3b, 3a).

27. The structure as claimed in claim 20, further comprising an intermediate electrochemically active element (3c) arranged between and spaced from the first and second electrochemically active elements (3a, 3b), whereby the first electrolyte portion (4a), in the first state contacts said first electrochemically active element (3a) and said intermediate electrochemically active element (3c) and is insulated from the second electrochemically active element (3b), and wherein the first electrolyte portion (4'), in the second state, provides ionic contact between the first, second and third electrochemically active elements (3a, 3b, 3c).

28. The structure as claimed in any one of claims 1-17, wherein a second electrochemically active element (3b) is spaced from the first electrochemically active element (3a), and wherein an intermediate electrochemically active element (3c) is arranged between and spaced from the first and second electrochemically active elements (3a, 3b),
wherein, in the first state, the intermediate electrochemically active element (3c) is ionically and electrically insulated from said first and second electrochemically active elements,
wherein, in the second state, the intermediate electrochemically active element (3c) is in ionic contact with the first and second electrochemically active elements (3a, 3b), and
wherein, in the second state, the first and second electrochemically active elements (3a, 3b) are ionically insulated from each other.

29. The structure as claimed in any one of claims 19-28, wherein the first and second electrochemically active elements (3a, 3b) are arranged in a common plane, and wherein the electrolyte portion (4a), in the first state, is arranged in a plane substantially parallel with and spaced from the common plane.

30. The structure as claimed in any one of claims 19-28, wherein the first and second electrochemically active elements (3a, 3b) are arranged in first and second separate, substantially parallel planes and wherein the electrolyte portion (4a) is arranged in a third plane between said first and second planes.

31. A switch comprising a structure as claimed in any one of the preceding claims.

32. A transistor element, comprising a structure as claimed in any one of claims 1-31.

33. The transistor element as claimed in claim 32, wherein the first electrochemically active element forms part of a connection between a source and a drain of the transistor.

34. A switch comprising the structure as claimed in any one of claims 1-7, wherein the electrolyte comprises first and second electrolyte components (4aa, 4bb), which in the first state are separated from each other, thereby rendering the electrolyte (4a, 4b) substantially non-ionically conducting, and wherein the electrolyte components (4aa, 4bb) are mixable upon said deformation, thereby rendering the electrolyte (4a, 4b) ionically conducting in the second state.

35. The switch as claimed in claim 34, wherein the electrolyte components (4aa, 4bb), in the first state, are arranged on opposite sides of the first electrochemically active element (3a, 3b), and whereby the first electrochemically active element (3b) is permeable to at least one of said electrolyte components (4aa, 4bb).

36. The switch as claimed in claim 34 or 35, wherein at least one of the components, in the first state, is encapsulated.

37. An electrochemical switch (1, 1') for controlling a current flow in an electrical circuit, the switch comprising:
a first electrochemically active element (3a),
a second electrochemically active element (3b)
an electrolyte (4a, 4b, 4', 4a', 4b'), arranged in contact with the first and second electrochemically active elements (3, 3a, 3b),
**characterized in that**
the electrolyte (4a, 4b) is deformable between:
a first state, wherein the switch (1), through a redox reaction between at least one of the electrochemically active elements (3, 3a, 3b) and the electrolyte (4a, 4b, 4', 4a', 4b'), provides a first electric characteristic, and
a second state, wherein the switch (1') through electrical contact between the first and second electrochemically active elements (3, 3a, 3b), provides a second, different electric characteristic.

38. A switch (1, 1') for controlling a current flow in an electrical circuit, the switch comprising:
a first electrode (3a),
a second electrode (3b)
a dielectricum (4a, 4b, 4', 4a', 4b'), arranged in contact with the first and second electrodes (3, 3a, 3b),
**characterized in that**
the dielectricum (4a, 4b) is deformable between:
a first state, wherein the switch (1) is open, and
a second state, wherein the first and second electrodes contact each other such that such that the switch is closed.
